# EUROPÄISCHE PATENTSCHRIFT

(11) **EP 1 716 341 B1**
(45) Veröffentlichungstag und Bekanntmachung des Hinweises auf die Patenterteilung: **30.12.2009**
(21) Anmeldenummer: 04802815.3
(22) Anmeldetag: 24.11.2004
(51) Int. Cl.: F16C 19/52, G01L 5/00, G01P 3/44

(54) **WÄLZLAGER MIT EINEM SYSTEM ZUR DATENERFASSUNG UND ZUR DATENVERARBEITUNG**
ANTIFRICTION BEARING COMPRISING A DATA COLLECTION AND PROCESSING SYSTEM
PALIER A ROULEMENT POURVU D'UN SYSTEME D'ACQUISITION ET DE TRAITEMENT DE DONNEES

(30) Priorität: 28.11.2003 DE 10355817
(43) Veröffentlichungstag der Anmeldung: 02.11.2006
(73) Patentinhaber: Schaeffler KG, 91074 Herzogenaurach (DE)
(72) Erfinder: GEMPPER, Sven, 97332 Volkach (DE); HERING, Joachim, 97078 Würzburg (DE)
(86) Internationale Anmeldenummer: PCT/DE2004/002606
(87) Internationale Veröffentlichungsnummer: WO 2005/052395

(56) Entgegenhaltungen:
- EP-A- 1 148 261
- WO-A-02/054031
- DE-A1- 4 218 949
- DE-A1- 19 747 001
- US-A- 4 747 456

## Beschreibung

### Gebiet der Erfindung

Die Erfindung betrifft ein Wälzlager mit einem System zur Datenerfassung und zur Datenverarbeitung, wobei das System an dem Wälzlager fest ist und wenigstens ein Sensorelement zum Erfassen von physikalischen Größen, Leiterelemente und elektronische Bauelemente aufweist.

### Hintergrund der Erfindung

Aus DE 101 36 438 A1 ist ein Wälzlager bekannt, an dem zur Ermittlung physikalischer Größen Sensoren befestigt sind. Mit den Sensoren werden auf die Lagerringe des Wälzlagers wirkenden Kräfte und Momente, zum Beispiel elastische Verformungen aus Wälzkontakten, erfasst. Die Sensoren sind als Dehnmesswiderstände ausgebildet und vorzugsweise in einer Nut am Umfang eines der Lagerringe befestigt. Diese Dehnmesswiderstände sind über eine Isolationsschicht auf einem metallischen Zwischenträger aufgebracht. Ein weiteres Trägermaterial ist als Schaltungsträger ausgebildet und umgibt den metallischen Zwischenträger mit den Dehnmessstreifen. Der Schaltungsträger nimmt elektronische Bauteile und Leiterbahnen auf. Die Zwischenträgerschicht und die Schaltungsträgerschicht sind an dem Lagerring in die Nut eingepresst oder mit der Nut verschweißt.

In DE 101 36 438 A1 sind als Voll- oder auch Halbbrückenschaltungen geschaltete Dehnmesswiderstände auf einem metallischen Zwischenträger beschrieben. Weiter nimmt das Wälzlager nach DE 101 36 438 A1 elektronische Bauelemente für die Auswertung der Sensorsignale und für die Übertragung dieser zu weiteren Messstellen oder zu einem Anschlussstecker bzw. zu einer Schaltung für die Auswertung der Signale auf. Die Übertragung der Signale in diesem Wälzlager wird dabei über Digital- oder Analogbussysteme, beispielsweise in einem Kraftfahrzeug, vorgenommen.

Die Nut zur Aufnahme des zuvor beschriebenen Systems zur Datenerfassung und Datenverarbeitung ist bei der Auslegung des Lagerringes und somit auch des Wälzlagers zu berücksichtigen. Ein Wälzlager ohne ein derartiges System ist nicht ohne weiteres gegen ein mit diesem System ausgestattetes bau- und größengleiches Lager austauschbar, da die Nut zur Aufnahme des Systems den entsprechenden Lagerring erheblich schwächen kann. Messlager in der Ausführung des Standes der Technik sind deshalb nicht in jedem Fall gegen größengleiche Lager ohne Messeinrichtung austauschbar, d. h. ein Wälzlager mit einem entsprechenden System ist in seinen Abmessungen in der Regel größer und kann deshalb nur nach Änderung der Umgebungskonstruktion in ein bestehendes System eingepasst werden.

Aus der nicht vorveröffentlichten Anmeldung DE 103 04 592 A1 sind Wälzlager mit dem beschriebenen System an flexiblen Folien bekannt. Dabei sind die einzelnen Bauelemente und deren Verbindungen auf die Folie aufgetragen und ggf. durch die Folie hindurch über Durchkontaktierungen miteinander verbunden. Derartige auf Folien beanspruchen zwar im Vergleich zu dem zuvor beschriebenen Stand der Technik weniger Bauraum sind aber jedoch relativ aufwendig herzustellen und an das Wälzlager zu montieren. Außerdem sind die Folien relativ empfindlich gegen mechanische Einflüsse und zum Beispiel gegen Schmierflüssigkeiten.

WO 02/054031 A1 beschreibt ein System zur Datenerfassung an einer Welle, auf der Wälzkörper abrollen, wobei auf der Welle eine hochohmige Schicht, auf dieser eine strukturierte nieder-ohmige Schicht für Kontakte und Leiterbahnen, und auf dieser wiederum eine piezoresistive Meßschicht ausgebildet ist. Die genannten Schichten sind aus diamantähnlichen Kohlenstoff (DLC) hergestellt, die geeignet dotiert sind. Das System mit den drei Schichten ist mit dem Korpus der Welle fest verbunden und über einen CVD-Prozeß auf die Welle aufgebracht. Die Druckschrift beschreibt weiter noch die Möglichkeit, Temperatursensoren zusätzlich zu den Drucksensoren vorzusehen, um die Temperatur im Bereich der Meßschicht zu erfassen und den Einfluss der Temperatur auf den erfassten Messwert rechnerisch beseitigen zu können. Das Problem der mechanischen Anpassung des Meßsystems an das Material der Welle bei höheren Temperaturen wird hierdurch nicht beseitigt.

EP 1 148 261 A2 beschreibt ein Wälzlager mit einem System zur Erfassung von Kräften, wobei das System SAW- oder BAW-Sensoren umfasst, die in ringförmigen Nuten in dem Außenring des Wälzlagers angeordnet sind. Die SAW- bzw. BAW-Sensoren sind in unmittelbaren Kontakt mit dem Korpus des Außenrings angeordnet. Weil die SAW- bzw. BAW-Sensoren fest an dem Korpus des Außenrings angeordnet sind, ist eine Anpassung bei einer thermischen Ausdehnung des Außenrings 1 nicht möglich und auch nicht erforderlich.

US 4,747,456 A beschreibt eine Kraftmessdose mit einem Zwischenteil aus einem metallischen Material mit einem deformierbaren Abschnitt, an dem ein dreilagiges System zum Erfassen von Kräften, speziell von Spannungen, vorgesehen ist. Auf das metallische Material ist eine Isolatorschicht z. B. aus SiO₂ aufgebracht, auf diese wiederum eine erste Lage und eine zweite Lage. Die erste Lage ist aus einem hochohmigen Widerstandsmaterial wie NiCr und die dritte Lage aus einem elektrischen Leiter wie Kupfer hergestellt. Die Dehnmeßstreifen sind in der zweiten Lage ausgebildet und Teil eines elektrischen Meßsystems. Aufgrund der festen Verbindung der Isolierschicht mit dem metallischen Korpus des deformierbaren Abschnitts ist ein Ausgleich unterschiedlicher thermischer Dehnungen nicht möglich.

DE 197 47 001 A1 beschreibt eine Welle mit einem Meßsystem zur Erfassung der Dehnung der Welle. Das Meßsystem umfasst eine dielektrische Schicht, die unmittelbar auf dem Korpus der Welle aufgebracht ist, eine Anordnung von einer Leiterbahn mit Kontaktflächen und einem Widerstand. Unmittelbar auf der Welle ist ein Dehnmeßstreifen angeordnet, der mit der Leiterbahn in Verbindung steht. Über der Leiterbahn ist eine Passivierungsschicht angeordnet. Die dielektrische Schicht umfasst beispielsweise eine Glasfritte, die über Oxidbrücken mit der Welle 1 fest verbunden ist. Die Druckschrift beschreibt keine Möglichkeit eines Ausgleichs thermischer induzierter Spannungen zwischen dem metallischen Material der Welle und der dielektrischen Schicht des Meßsystems. Die dielektrische Schicht ist mit dem Korpus der Welle fest verbunden.

### Zusammenfassung der Erfindung

Die Aufgabe der Erfindung ist es daher, ein Wälzlager mit einem System zur Datenerfassung und zur Datenverarbeitung zu schaffen, das sich kostengünstig herstellen lässt, wenig Bauraum beansprucht und gegen abmessungsgleiche Wälzlager ohne ein Messsystem austauschbar ist. Weiterhin ist ein Wälzlager mit einem derartigen System zu schaffen, das gegen Umwelteinflüsse wie Stoß und Erschütterungen, gegen Flüssigkeiten, insbesondere aggressive Mittel, relativ unempfindlich und das thermisch hoch widerstandsfähig ist.

Diese Aufgabe ist nach dem Gegenstand des Anspruches 1 dadurch gelöst, dass das System zur Datenerfassung und zur Datenverarbeitung in einer Trägerschicht von stapelförmig aufeinander angeordneten und aneinander liegenden Trägerschichten aus mindestens einem keramischen Werkstoff ausgebildet ist und wobei zwei aufeinander liegende der Trägerschichten miteinander verbunden sind. Dabei sind die Bauelemente einzeln zumindest teilweise in einer der Trägerschichten aus Keramik eingebettet. Unter dem Begriff elektronische Bauelemente sind Elemente wie Sensoren, Leiterelemente, Widerstände, Kondensatoren und weitere für die Sensorik, Signalübertragung und Signalauswertung notwendigen Bauelemente zusammengefasst. Erfindungsgemäß ist eine an dem Wälzlager feste der Trägerschichten durch eine thermische Ausgleichsschicht von dem Wälzlager getrennt.

Wahlweise sind die Trägerschichten Substrate für im Dickschichtverfahren oder Dünnschichtverfahren aufgetragene Bauelemente oder die Trägerschichten sind Träger von im SMD-Verfahren aufgebrachten Bauteilen. Alternativ dazu sind die Trägerschichten, die mit den Schaltungen versehenen sind im Dickschichtverfahren aufgetragene Schichten. Die Trägerschichten sind weiter Isolationsschichten und Basisschichten aus Keramik, die fundamentartig die anderen Trägeschichten des Systems aufnehmen oder abdecken und somit schützen. Diese Schichten der unterschiedlichsten Ausführung und mit den unterschiedlichen Funktionen sind lamellenartig in einem System aufeinander gestapelt. Dabei umfasst jede der Trägerschichten zum Beispiel einen Innenring oder einen Außenring des Wälzlagers - bzw. ist von diesem umfasst oder ist beispielsweise axial an einem der Lagerringe angeordnet. Die Erfindung ist an Linear- und Rotativlagern und dort wiederum an Gleit- und Wälzlagern einsetzbar.

Mit der Dickschichttechnik werden im Siebdruckverfahren dünne Schichten aus Metalloxyden (Widerstände, Leiterbahnen) auf das Substrat oder eine weitere der Trägerschichten gedruckt. Die Schichtdicke derartiger Dickschichten ist vorzugsweise 1 - 80 Mikrometer. Die im Siedruckverfahren aufgetragenen Pasten sind feinkörnige Gemenge aus anorganischen Bestandteilen in einem organischen Trägermaterial, das weiterhin Metallpulver (Leitpasten), Metalloxyde (Widerstandspasten), Glasfritte oder Keramiken (Dieelektrika) enthält. Das Material wird mit dem Siebdruckverfahren auf die keramischen Substrate strukturiert aufgebracht und dann in einzelnen Schichten oder zusammen als Stapel eingebrannt.

Alternativ werden mit der so genannten Dünnschichttechnik über Verdampfen von Metallen zur Bildung der Schaltkreise im Hochvakuum aufgetragen. Die Schichtdicke ist vorzugsweise 0,1 µm und wird jedoch beispielsweise mindestens noch auf 3 Mikrometer galvanisch verstärkt.

Die Leiterbahnen sind auf Edelmetallbasis, zum Beispiel aus Palladium, Silber, Platin, Gold oder aus Legierungen von diesen gebildet. Die Isolationsschicht (Dieelektrikum für sich kreuzende Leiterbahnen) ist eine Glaskeramikschicht (Glas-Keramikpaste BaTiO₃, TiO₂, Mg, Zn oder CaTiO₃). Weiter sind in die Keramikschichten Goldschicht-Pads für Bonddrähte und verschiedene Widerstandsschichten wie Schichten aus Palladiumoxyd/Silber, Iridiumoxyd/Platin- oder rutheniumhaltige Gemische vorgesehen.

Außer den Dichtschicht bzw. Dünnschichtschaltungen sind SMD-Bauteite an der Oberfläche des Systems denkbar. SMD-Bauteile sind Surface-Mounted-Devices = auf Oberflächen montierte Bauteile, für die keine Bestückungslöcher in der entsprechenden Trägerschicht benötigt werden. Dazu wird zum Beispiel Lötpaste auf die Lötpads aufgetragen, die Bauteile werden anschließend zu den Kontakten und in der Paste positioniert und schließlich die Lötverbindung durch Schmelzen der Lötpaste hergestellt (Reflow-Lötverfahren). Ggf. werden die Verbindungen zwischen den Bauteilen durch Bonden hergestellt. Dabei sind die Bauteile mittels Drähten untereinander verbunden, wodurch auch Höhenunterschiede zwischen den Anschlüssen einzelner zu verbindender Elemente ausgeglichen werden können. Zum Beispiel ist bei Drahtbonden Bondmaterial aus AU oder AL-SI-Legierungen eingesetzt, das durch Thermokompressionsbonden bzw. Ultraschallbonden und Kugelkeilschweißverbindungen befestigt ist. Ggf. enthält das System auch Die-Bond-Bauteile. Unter Die-Bonden ist das Aufbringen kleiner Chips zu verstehen, die ungehäuste, d.h. unverpackte Halbleiter wie zum Beispiel Dioden und IC's, die mit Leit- oder nicht Leitkleber, durch Schweißen oder durch Löten befestigt sind. Diese Chips sind wahlweise mit den Goldbond-Pads über Aludraht oder Golddraht verdrahtet.

Mittels einer Mehrlagendrucktechnik sind mehrere der Schaltungsebenen realisierbar. Dabei handelt es sich um eine Abfolge von innen nach außen oder von außen nach innen aufeinander gestapelter Leiterbahnen-, Isolator- und Widerstandsschichten. Löcher für die Durchkontaktierungen sind in der Regel in die Trägerschichten mit Laser eingebracht und mit Metall ausgefüllt.

Für die Trägerschichten (Substrate) wird in der Regel Keramikpulver aus AL₂O₃ AIN- oder BeO-Keramik eingesetzt. Das Keramikpulver wird dazu mit verschiedenen Bindern fließfähig gemacht und in Formen gespritzt oder gegossen. Nach dem Befreien der Keramik von dem Binder werden die einzelnen Schichten ein oder beidseitig bestückt, mit oder ohne Durchkontaktierungen versehen aufeinander gestapelt und eingebrannt. Die Temperaturen für das Einbrennen liegen derzeit vorzugsweise in einem Bereich zwischen 500° - 900° C. Die einzelnen Trägerschichten weisen als Trägermaterial wahlweise unter einander den gleichen keramischen Werkstoff aber auch unterschiedliche keramische Werkstoffe auf.

Die Vorteile des erfindungsgemäßen Systems zur Datenerfassung und zur Datenverarbeitung sind im wesentlichen:
- Platzersparnis und hohe Bauteildichte
- gute Wärmeableitung und Verteilung durch die Keramik, ggf. Kühlung durch gesonderte Kanäle in oder zwischen den Trägerschichten
- hohe Zuverlässigkeit durch wenig Lötverbindungen
- verbesserte elektrische Eigenschaften
- kürzere Schaltzeiten aufgrund der hohen Bauteildichte sowie kürzerer Verbindungen
- geringes Gewicht
- hohe mechanische Festigkeit gegen Stoß und Vibrationen
- widerstandsfähig gegen hohe Temperaturen
- hohe chemische Beständigkeit insbesondere gegen aggressive Medien
- die automatische Herstellung derartiger Systeme ist möglich
- Kostensenkung bei der Herstellung zum Beispiel durch Automatisierung.

Durch die robuste Eigenschaft von Keramik gegen äußere chemische Einflüsse ist es möglich, Sensoren in der obersten Schicht bzw. in der untersten zum Lager hingewandten Schicht zu integrieren. Diese Sensoren sind beispielsweise Gassensoren aber auch die schon diskutierten Drucksensoren. Eine Ausgestaltung der Erfindung sieht deshalb das Aufbringen von Schichten oder Fasern aus Funktionskeramiken wie dieelektrische, piezokeramische oder auch magnetische Schichten, die bei Druck mit dem Aufbau einer elektrischen Ladung reagieren und die so die bekannten Widerstands-DMS ersetzen können.

Die Systeme sind durch Kleben oder Einpressen in eine Nut auf der entsprechenden Oberfläche des Wälzlagers, zum Beispiel an einem Innenring, Außenring, einer Linearschiene eingebracht. Alternativ sind die Systeme als ein Gehäuse o.ä. ein Bestandteil des Lagers. Die Lagerteile, auf denen die Systeme befestigt sind, sind wahlweise aus Stahl oder aus Keramik aber auch aus allen anderen denkbaren Werkstoffen hergestellt.

### Kurze Beschreibung der Zeichnungen

Die Erfindung wird nachfolgend anhand von Ausführungsbeispielen näher erläutert. Es zeigen im Einzelnen:
- Figur 1: Die schematische Darstellung eines Systems zur Datenerfassung und zur Datenverarbeitung, das auf ein nicht weiter dargestelltes Wälzlager aufgebracht ist und bei dem die einzelnen Schichten in Dickschichttechnik aufgebracht und miteinander laminiert sind - die Darstellung im Schnitt,
- Figur 2: das System nach Figur 1, an dem jedoch zusätzlich mit Dünnschichttechnik aufgebrachte Strukturen ausgebildet sind,
- Figur 3: das System nach Figur 2 in einem Wälzlagerring
- Figur 4: das System nach Figur 2, an dem zusätzlich SMD-Bauelemente angeordnet sind,
- Figur 5: das System nach Figur 3 in einem Wälzlagerring,
- Figur 6: den Ausschnitt eines erfindungsgemäßen Systems, mit einem Druck aktivierenden/aktiviertem Piezoelement,

### Detaillierte Beschreibung der Zeichnungen

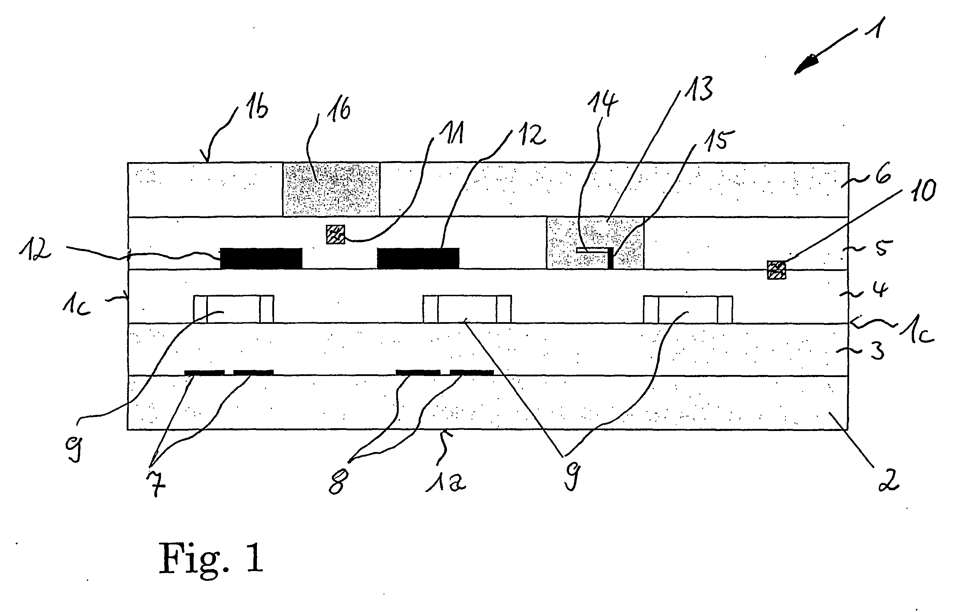

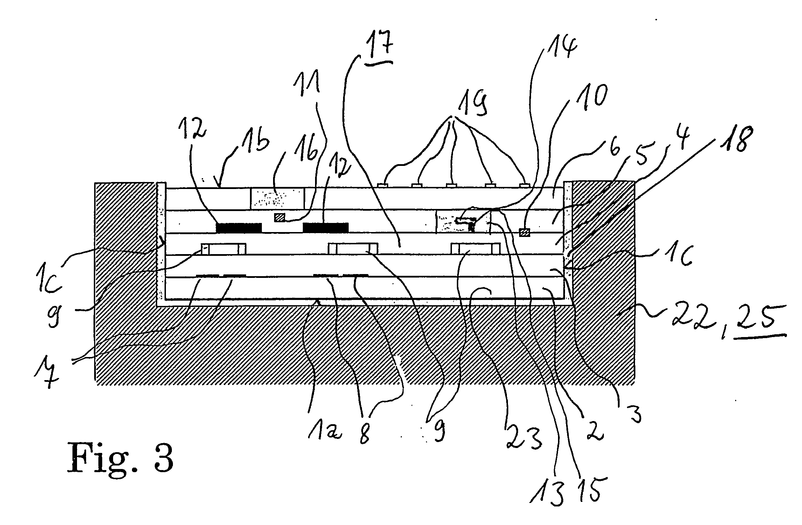

Figur 1 zeigt ein System 1 zur Datenerfassung und zur Datenverarbeitung an einem nicht dargestellten Wälzlager mit den Trägerschichten 2, 3, 4, 5, 6. Das System ist stark vergrößert und nicht maßstäblich dargestellt. Die Unterseite 1a des Systems 1 liegt zum Beispiel an der Oberfläche eines Wälzlagers 25 zum Erfassen von Verformungen an dieser Oberfläche an. Das System 1 ist wahlweise wie das System 17 (Figur 3) in eine Nut 23 eines Wälzlagerringes 22 eines Wälzlagers 25 eingebracht, wobei das System 1 zumindest teilweise an der Unterseite 1a und an den Flanken 1 c von der Nut 23 umgriffen ist. Alternativ dazu ist das System 1 an den Flanken 1c und an der Oberseite von einem Gehäuse beispielsweise aus Keramik oder einem Kunstharz bzw. aus anderen geeigneten Werkstoffen umgeben und sitzt mit der Unterseite 1a auf einer ebenen Oberfläche eines Wälzlagers ohne Nut.

Die Trägerschicht 2 ist eine Schicht aus Keramik an der sich das System zum Wälzlagerring abstützt. Die Trägerschicht 3 ist ein Substrat, dass in Mäanderform ausgebildete Leiterbahnen 7 und DMS 8 aufnimmt. Das Substrat ist aus Keramik. Die Trägerschicht 4 ist eine im Dickschichtverfahren aufgetragene keramische Schicht mit passiven elektrischen Bauelementen 9, wie Kondensatoren und Widerständen.

Radial zwischen der Trägerschicht 4 und der Trägerschicht 5 ist ein Kanal 10 ausgebildet, der beispielsweise mit dem Kanal 11 in der Trägerschicht 5 verbunden ist. Die Kanäle 10 und 11 sind wahlweise mit einer technischen Flüssigkeit gefüllt.

Die Trägerschicht 5 ist eine im Dickschichtverfahren aufgetragene keramische Schicht mit elektrischen Leiterbahnen 12, einem Sensor 13, beispielsweise einem Beschleunigungssensor, wobei in der Umgebung des Sensors ein Hohlraum 14 und die seismische Masse mit Kontaktierung 15 ausgebildet sind. Die Trägerschicht 6 schließt das System 1 radial nach außen ab und ist mit mindestens einem Sensor 16 als Druck-/Gassensor versehen. Der Gassensor ist seitens der Oberseite 1 b radial von außen zugängig.

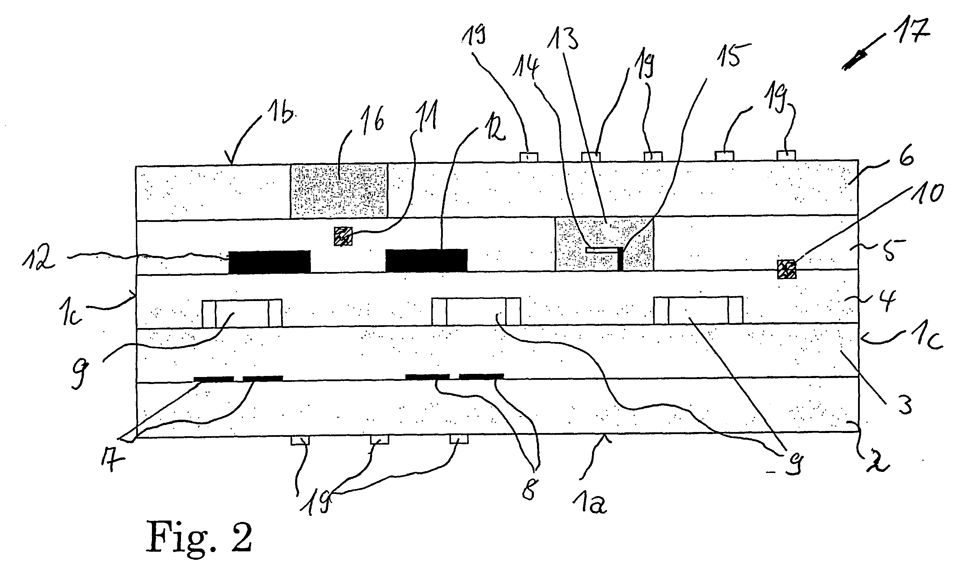

Figur 2 zeigt mit dem System 17 eine alternative Gestaltung des Systems 1 nach Figur 1, bei dem zusätzlich außen auf die Trägerschicht 6 und an der das Wälzlager 25 berührenden Unterseite 1a weitere Bauelemente 19 mit Dünnschichttechnik aufgebracht sind. Derartige Bauelemente 19 sind alternativ auch auf eine der Schichten 2, 3, 4 und 5 aufgetragen und somit von jeweils zwei der Schichten 2, 3, 4, 5 und 6 eingeschlossen. Die Bauelemente 19 sind zum Beispiel Sensoren und Leiter, die somit auch direkt zwischen der Oberfläche des Wälzlagers 25, an dem das System 17 fest ist, und der Trägerschicht 2 angeordnet sein können.

Figur 3 zeigt, wie das System 17 in einem Wälzlagerring 22 des Wälzlagers 25 verbaut ist. Dazu sitzt das System in einer Nut 23 des Wälzlagerringes 22 und ist an der Unterseite 1a und an den Flanken 1c von der Nut 23 umgeben. Die Oberseite 1 b ist wahlweise mit einer Füll-/Schutzschicht abgedeckt, in diesem Fall aber nicht abgedeckt. Zwischen dem System 17 und dem Wälzlager 25 ist eine Ausgleichsschicht (Modifizierer) 18 für thermische Dehnungsdifferenzen aufgetragen.

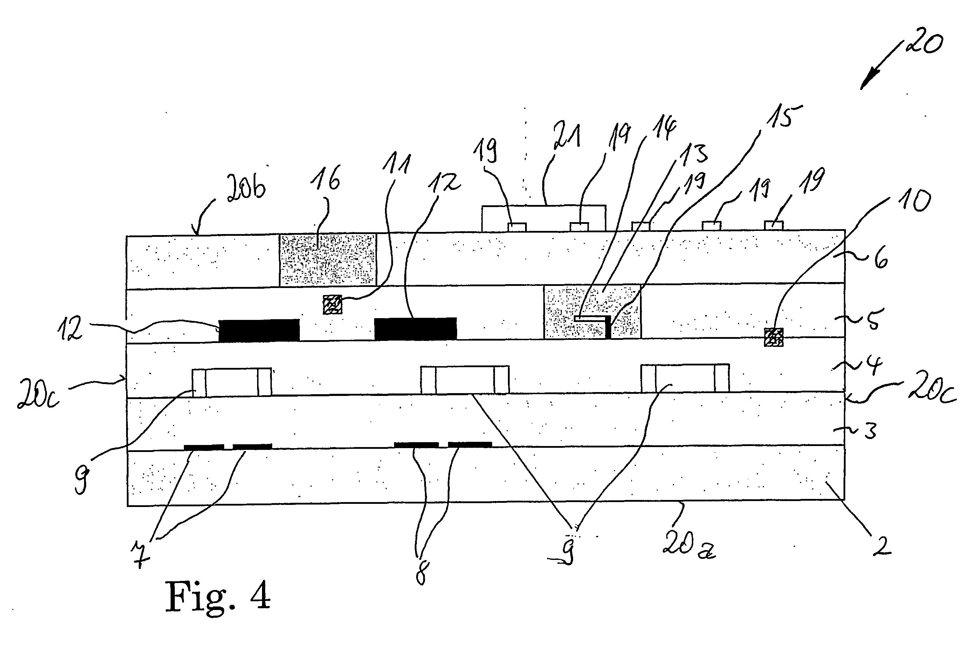

Das System 20 zur Datenverarbeitung und zur Datenerfassung nach Figur 4 ist alternativ zu dem System 1 zusätzlich mit SMD-Bauelementen 21, zum Beispiel ASIC's versehen. Die SMD-Bauelemente sind ungehäust auf der von der Oberfläche des Wälzlagers abgewandten Oberseite 20b auf die Trägerschicht 6 kontaktiert.

Die einzelnen Trägerschichten 3, 4, 5, 6 sind in Dickschichtstruktur gegossen oder gespritzt, wobei die einzelnen Strukturen der Bauelemente 7, 8, 9, 10, 11, 12, 14, 15, 16, 19, 21 gleichzeitig erzeugt werden. Diese Schichten 3, 4, 5, 6 werden miteinander laminiert. Als Ergebnis sind die Schichten 2, 3, 4, 5, 6 fest miteinander verbunden, jedoch ist das gesamte System weiterhin weich und formbar. Erst mit dem abschließenden Sinterprozess nimmt die Struktur aus den Schichten 2, 3, 4, 5, 6 dann die vorgegebene äußere Kontur (zum Beispiel den Krümmungsradius eines Außenringes) in einer entsprechenden Form, die die spätere Einbaugeometrie des Wälzlagerringes und des Gehäuses des Wälzlagers 25 vorwegnimmt, an.

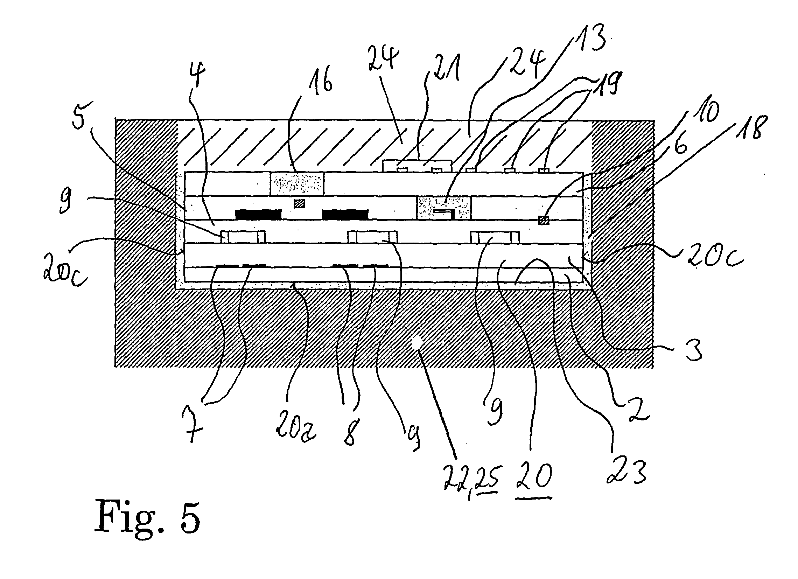

Figur 5 zeigt, wie das System 20 in einem Wälzlagerring 22 verbaut ist. Dazu sitzt das System in einer Nut 23 des Wälzlagerringes 22 und ist an der Unterseite 20a und an den Flanken 20c von der Nut 23 umgeben. Die Nut 23 ist oberhalb des Systems 20 mit Füllmaterial 24 aufgefüllt, das die Oberseite 20b des Systems 20 abdeckt und das die Bauelemente19, 21 teilweise einschließt. Zwischen dem System 20 und dem Wälzlager 25 ist eine Ausgleichsschicht 18 für thermische Dehnungsdifferenzen aufgetragen.

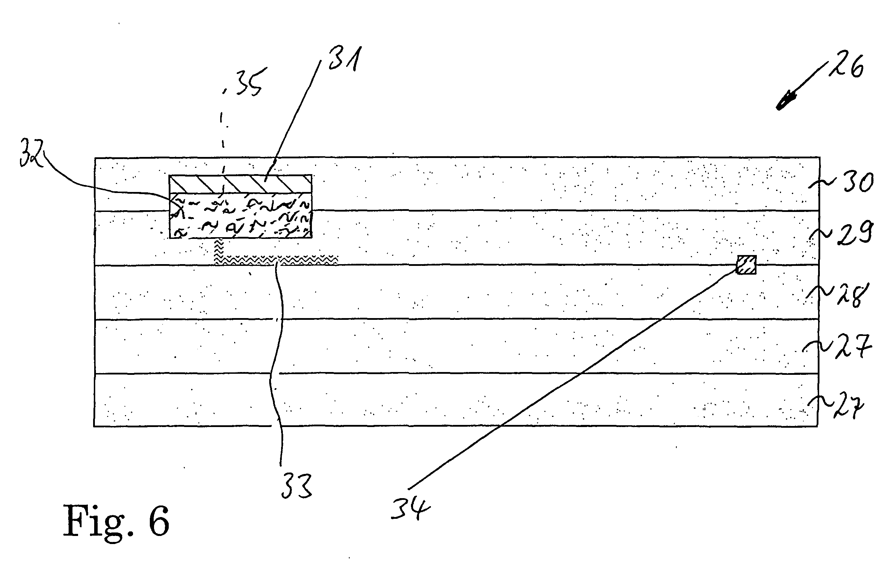

In Figur 6 ist ein System 26 zur Datenerfassung und zur Datenverarbeitung aus den Trägerschichten 27, 28, 29, 30, aus einem Piezoelement 31, einem Flüssigkeitsspeicher 32 und Kanälen 33 und 34 dargestellt. Zwischen den Trägerschichten 28 und 29 sind die Kanäle 33 und 34 ausgebildet und wahlweise miteinander verbunden. Der Kanal 33 führt zu dem Flüssigkeitsspeicher 32, der mit einer Druckflüssigkeit 35 gefüllt ist. Das Piezoelement 31 ist wahlweise als Aktuator ausgebildet, mit dem durch Anlegen einer Spannung die DruckFlüssigkeit 35 in die Kanäle 33, 34 gedrückt werden kann oder ist als Sensor ausgelegt, der durch den Druck in dem Flüssigkeitsspeicher 32 aus den Kanälen 33 und 34 in ein Spannungssignal umsetzt und somit den Druck misst.

### Bezugszeichen

- 1: System
- 1a: Unterseite
- 1 b: Oberseite
- 1c: Flanken
- 2: Trägerschicht
- 3: Trägerschicht
- 4: Trägerschicht
- 5: Trägerschicht
- 6: Trägerschicht
- 7: Leiterbahnen
- 8: DMS
- 9: Passive Bauelemente
- 10: Kanal
- 11: Kanal
- 12: Leiterbahnen
- 13: Sensor
- 14: Hohlraum
- 15: Kontaktierung
- 16: Sensor
- 17: System
- 18: Ausgleichsschicht
- 19: Bauelement
- 20: System
- 20a: Unterseite
- 20b: Oberseite
- 20c: Flanken
- 21: SMD-Bauelemente
- 22: Wälzlagerring
- 23: Nut
- 24: Füllmaterial
- 25: Wälzlager
- 26: System
- 27: Trägerschichten
- 28: Trägerschichten
- 29: Trägerschichten
- 30: Trägerschichten
- 31: Piezoelement
- 32: Flüssigkeitsspeicher
- 33: Kanal
- 34: Kanal
- 35: Druckflüssigkeit

## Patentansprüche

1. Wälzlager (25) mit einem System (1, 18, 20, 26) zur Datenerfassung und zur Datenverarbeitung, wobei das System (1, 18, 20, 26) an dem Wälzlager (25) fest Ist und wenigstens ein Sensorelement (8, 13, 16, 31) zum Erfassen von physikalischen Größen, Leiterelemente (7, 12, 15) und elektronische Bauelemente (9, 19, 21) aufweist, und wobei wenigstens ein erstes Element (7, 8, 9, 12, 13, 14, 15, 16) der Elemente (7, 8, 9, 12, 13, 14, 15, 16, 19, 21) In eine Trägerschicht (3, 4, 5, 6, 28, 29, 30) von stapelförmig aufeinander angeordneten und aneinander liegenden Trägerschichten (2, 3, 4, 5, 6, 27, 28, 29, 30) zumindest teilweise eingebettet ist, wobei die Trägerschichten (2, 3, 4, 5, 6, 27, 28, 29, 30) aus mindestens einem keramischen Werkstoff bestehen sowie jeweils zwei aufeinander liegende der Trägerschichten (2, 3, 4, 6, 6, 27, 28, 29, 30) miteinander verbunden sind, und bei dem eine an dem Wälzlager (25) feste der Trägerschichten (2, 3, 4, 5, 6, 27, 28, 29, 30) durch eine thermische Ausgleichschicht (18) von dem Wälzlager (25) getrennt ist.

2. Wälzlager (25) nach Anspruch 1, bei dem wenigsten eine der Trägerschichten (3, 4, 5, 6) ein Substrat für im Dickschichtverfahren aufgetragene Elemente ist.

3. Wälzlager (25) nach Anspruch 1, bei dem wenigstens drei der Trägerschichten (2, 3, 4, 5, 6, 27, 28, 29, 30) eine Abfolge aufeinander gestapelter Leiterbahnen-, Wlderstands- und Isolationsschichten sind.

4. Wälzlager nach Anspruch 1, bei dem wenigstens eine der Trägerschichten (2, 6) Im Dünnschltverfahren aufgetragene erste Elemente (19) der Elemente (7, 8, 9, 12, 13, 14, 15, 16, 19, 21) trägt.

5. Wälzlager (25) nach Anspruch 1, bei dem zumindest ein zweites Element (7, 8, 9, 12, 13, 14, 15, 16) der Elemente (7, 8, 9, 12, 13, 14, 15, 16, 19, 21) von zwei der Trägerschichten (2, 3, 4, 5, 6, 27, 28, 29, 30) eingeschiossenist.

6. Wälzlager (25) nach Anspruch 5, bei der wenigstens ein drittes Element (7, 8, 9, 12, 13, 15, 16) der zweiten Elemente (7, 8, 9, 12, 13, 14, 15, 16) an einer Außenfläche einer ersten Trägerschicht (2, 3, 4, 5) zumindest anliegt, wobei die erste Trägerschicht (2, 3, 4, 5) zwischen einer zweiten Trägerschicht (3, 4, 5, 6) und einer Oberfläche des Wälzlagers (25) angeordnet ist und wobei das System (1,17, 20) zumindest an der Oberfläche fest ist.

7. Wälzlager (25) nach Anspruch 5, bei dem zumindest ein viertes Element (13) der ersten Elemente (7, 8, 9, 12, 13, 14, 15, 16) mit einer von einer Oberfläche an dem Wälzlager (25) wegweisenden Außenfläche an einer fünften Trägerschicht (6) der Trägerschichten (2, 3, 4, 5, 6, 27, 28, 29, 30) anliegt, wobei das vierte Element (13) zwischen der fünften Trägerschicht (6) und einer Oberfläche des Wälzlagers 25 angeordnet ist und wobei das System (1, 17, 20) zumindest an der Oberfläche fest ist.

8. Wälzlager (25) nach Anspruch 1 bei dem wenigstens eine der TrägerSchichten (2, 3, 4, 5, 6, 27, 28, 29, 30) das Wälzlager (25) umfangsseitig vollständig umgreift.

9. Wälzlager (25) nach Anspruch 1, bei dem wenigstens ein Element (19, 21) der Elemente (7, 8, 9, 12, 13, 14, 15, 16, 19, 21) ein auf eine Trägerschicht (6) der Trägerschichten (2, 3, 4, 5, 8, 27, 28, 29, 30) oberflächenmontiertes Bauelement (SMD) ist.

10. Wälzlager (25) nach Anspruch 1, bei dem das Sensorelement (8, 13, 16, 31) wenigstens eine plezokeramlsche Schicht Ist.

11. Wälzlager (25) nach Anspruch 1, bei dem das Sensorelement (8, 13, 16, 31) zumindest eine piezokeramische Faser ist.

12. Wälzlager (25) nach Anspruch 1, bei dem das Sensorelement (8, 13, 16, 31) wenigstens ein Dehnmessstreifen ist.

13. Wälzlager (25) nach einem der Ansprüche 1 bis 12, wobei die einzelnen Trägerschichten (3, 4, 5, 6) In Dlckschichtstruktur gegossen oder gespritzt sind, und wobei die einzelnen Strukturen der Bauelemente (7, 8, 9, 10, 11, 12, 14, 15, 16, 19, 21) gleichzeitig erzeugt worden sind, und wonach die Trägerschichten (3, 4, 5, 6) miteinander laminiert worden sind.

## Claims

1. Anti-friction bearing (25) having a system (1, 18, 20, 26) for collecting data and for processing data, wherein the system (1, 18, 20, 26) is secured to the anti-friction bearing (25) and has at least one sensor element (8, 13, 16, 31) for collecting physical variables, conductor elements (7, 12, 15) and electronic components (9, 19, 21), and wherein at least a first element (7, 8, 9, 12, 13, 14, 15, 16) of the elements (7, 8, 9, 12, 13, 14, 15, 16, 19, 21) is at least partially embedded in a carrier layer (3, 4, 5, 6, 28, 29, 30) of carrier layers (2, 3, 4, 5, 6, 27, 28, 29, 30) which are arranged one on top of the other in the form of a stack and bear one against the other, wherein the carrier layers (2, 3, 4, 5, 6, 27, 28, 29, 30) are composed of at least one ceramic material, and in each case two of the carrier layers (2, 3, 4, 5, 6, 27, 28, 29, 30) which rest one on the other are connected to one another, and in which one of the carrier layers (2, 3, 4, 5, 6, 27, 28, 29, 30) which is fixed to the anti-friction bearing (25) is separated from the anti-friction bearing (25) by a thermal equalizing layer (18).

2. Anti-friction bearing (25) according to Claim 1, in which at least one of the carrier layers (3, 4, 5, 6) is a substrate for elements which are applied using a thick-film method.

3. Anti-friction bearing (25) according to Claim 1, in which at least three of the carrier layers (2, 3, 4, 5, 6, 27, 28, 29, 30) are a sequence of conductor track layers, resistance layers and insulating layers which are stacked one on top of the other.

4. Anti-friction bearing according to Claim 1, in which at least one of the carrier layers (2, 6) supports first elements (19), applied using a thin-film method, of the elements (7, 8, 9, 12, 13, 14, 15, 16, 19, 21).

5. Anti-friction bearing (25) according to Claim 1, in which at least a second element (7, 8, 9, 12, 13, 14, 15, 16) of the elements (7, 8, 9, 12, 13, 14, 15, 16, 19, 21) of two of the carrier elements (2, 3, 4, 5, 6, 27, 28, 29, 30) is included.

6. Anti-friction bearing (25) according to Claim 5, in which at least a third element (7, 8, 9, 12, 13, 15, 16) of the second elements (7, 8, 9, 12, 13, 14, 15, 16) bears at least against an outer face of a first carrier layer (2, 3, 4, 5), wherein the first carrier layer (2, 3, 4, 5) is arranged between a second carrier layer (3, 4, 5, 6) and a surface of the anti-friction bearing (25), and wherein the system (1, 17, 20) is fixed at least to the surface.

7. Anti-friction bearing (25) according to Claim 5, in which at least a fourth element (13) of the first elements (7, 8, 9, 12, 13, 14, 15, 16) bears with an outer face, facing away from a surface on the anti-friction bearing (25), against a fifth carrier layer (6) of the carrier layers (2, 3, 4, 5, 6, 27, 28, 29, 30), wherein the fourth element (13) is arranged between the fifth carrier layer (6) and a surface of the anti-friction bearing (25), and wherein the system (1, 17, 20) is fixed at least to the surface.

8. Anti-friction bearing (25) according to Claim 1, in which at least one of the carrier layers (2, 3, 4, 5, 6, 27, 28, 29, 30) engages around the entire circumference of the anti-friction bearing (25).

9. Anti-friction bearing (25) according to Claim 1, in which at least one element (19, 21) of the elements (7, 8, 9, 12, 13, 14, 15, 16, 19, 21) is a component (SMD) which is surface-mounted on one carrier layer (6) of the carrier layers (2, 3, 4, 5, 6, 27, 28, 29, 30).

10. Anti-friction bearing (25) according to Claim 1, in which the sensor element (8, 13, 16, 31) is at least one piezo-ceramic layer.

11. Anti-friction bearing (25) according to Claim 1, in which the sensor element (8, 13, 16, 31) is at least one piezo-ceramic fibre.

12. Anti-friction bearing (25) according to Claim 1, in which the sensor element (8, 13, 16, 31) is at least one strain gauge.

13. Anti-friction bearing (25) according to one of Claims 1 to 12, wherein the individual carrier layers (3, 4, 5, 6) are cast or injection moulded in a thin-film structure, and wherein the individual structures of the components (7, 8, 9, 10, 11, 12, 14, 15, 16, 19, 21) have been generated simultaneously, and after which the carrier layers (3, 4, 5, 6) have been laminated to one another.

## Revendications

1. Palier de roulement (25) doté d'un système (1, 18, 20, 26) de saisie de données et de traitement de données, le système (1, 18, 20, 26) étant fixé sur le palier de roulement (25) et présentant au moins un élément de détection (8, 13, 16, 31) qui détecte des grandeurs physiques, des éléments conducteurs (7, 12, 15) et des composants électroniques (9, 19, 21), au moins un premier (7, 8, 9, 12, 13, 14, 15, 16) des éléments (7, 8, 9, 12, 13, 14, 15, 16, 19, 21) étant incorporé au moins partiellement dans une couche de support (3, 4, 5, 6, 28, 29, 30) de couches de support (2, 3, 4, 5, 6, 27, 28, 29, 30) empilées les unes sur les autres et adjacentes les unes aux autres, les couches de support (2, 3, 4, 5, 6, 27, 28, 29, 30) étant constituées d'au moins un matériau céramique et les couches de support (2, 3, 4, 5, 6, 27, 28, 29, 30) situées les unes sur les autres étant reliées deux à deux, une des couches de support (2, 3, 4, 5, 6, 27, 28, 29, 30) fixée sur le palier de roulement (25) étant séparée du palier de roulement (25) par une couche (18) de compensation thermique.

2. Palier de roulement (25) selon la revendication 1, dans lequel au moins une des couches de support (3, 4, 5, 6) est un substrat pour un élément appliqué par un procédé en couche épaisse.

3. Palier de roulement (25) selon la revendication 1, dans lequel au moins trois des couches de support (2, 3, 4, 5, 6, 27, 28, 29, 30) sont des successions de couches superposées de pistes conductrices, de résistance et d'isolation.

4. Palier de roulement selon la revendication 1, dans lequel au moins une des couches de support (2, 6) porte des premiers (19) des éléments (7, 8, 9, 12, 13, 14, 15, 16, 19, 21) appliqués par un procédé en couche mince.

5. Palier de roulement (25) selon la revendication 1, dans lequel au moins un deuxième (7, 8, 9, 12, 13, 14, 15, 16) des éléments (7, 8, 9, 12, 13, 14, 15, 16, 19, 21) est englobé par deux des couches de support (2, 3, 4, 5, 6, 27, 28, 29, 30).

6. Palier de roulement (25) selon la revendication 5, dans lequel au moins un troisième (7, 8, 9, 12, 13, 15, 16) des deuxièmes éléments (7, 8, 9, 12, 13, 14, 15, 16) repose sur une surface extérieure d'une première couche de support (2, 3, 4, 5), la première couche de support (2, 3, 4, 5) étant disposée entre une deuxième couche de support (3, 4, 5, 6) et une surface du palier de roulement (25), le système (1, 17, 20) étant fixé au moins sur la surface.

7. Palier de roulement (25) selon la revendication 5, dans lequel au moins un quatrième (13) des premiers éléments (7, 8, 9, 12, 13, 14, 15, 16) repose par une surface extérieure non tournée vers une surface du palier de roulement (25) sur une cinquième (6) des couches de support (2, 3, 4, 5, 6, 27, 28, 29, 30), le quatrième élément (13) étant disposé entre la cinquième couche de support (6) et une surface du palier de roulement (25), le système (1, 17, 20) étant fixé au moins à la surface.

8. Palier de roulement (25) selon la revendication 1, dans lequel au moins l'une des couches de support (2, 3, 4, 5, 6, 27, 28, 29, 30) entoure complètement la périphérie du palier de roulement (25).

9. Palier de roulement (25) selon la revendication 1, dans lequel au moins un (19, 21) des éléments (7, 8, 9, 12, 13, 14, 15, 16, 19, 21) est un composant (SMD) monté en surface sur une couche de support (6) des couches de support (2, 3, 4, 5, 6, 27, 28, 29, 30).

10. Palier de roulement (25) selon la revendication 1, dans lequel l'élément de détection (8, 13, 16, 31) est au moins une couche piézocéramique.

11. Palier de roulement (25) selon la revendication 1, dans lequel l'élément de détection (8, 13, 16, 31) est au moins une fibre piézocéramique.

12. Palier de roulement (25) selon la revendication 1, dans lequel l'élément de détection (8, 13, 16, 31) est au moins un ruban de mesure de dilatation.

13. Palier de roulement (25) selon l'une des revendications 1 à 12, dans lequel les différentes couches de support (3, 4, 5, 6) sont coulées ou injectées dans une structure en couche épaisse, les différentes structures des composants (7, 8, 9, 10, 11, 12, 14, 15, 16, 19, 21) ayant été formées simultanément, suite à quoi les couches de support (3, 4, 5, 6) sont stratifiées les unes sur les autres.
